## Europäisches Patentamt

## European Patent Office

## Office européen des brevets

(11) Veröffentlichungsnummer: **0 007 107**
**A1**

# EUROPÄISCHE PATENTANMELDUNG

(21) Anmeldenummer: 79102437.5

(22) Anmeldetag: 13.07.79

(51) Int. Cl.³: **B 60 N 1/02**

(30) Priorität: 17.07.78 DE 2831291

(43) Veröffentlichungstag der Anmeldung:
23.01.80 Patentblatt 80/2

(84) Benannte Vertragsstaaten:
FR GB SE

(71) Anmelder: C. Rob. Hammerstein GmbH

D-5650 Solingen 13(DE)

(72) Erfinder: Bauer, Heinz
Hammerstrasse 9
D-5650 Solingen 11(DE)

(72) Erfinder: Gedig, Alfred
Hammerstrasse 28
D-5650 Solingen 11(DE)

(72) Erfinder: Becker, Burckhard
Bussche-Kessel-Weg 76
D-5650 Solingen 11(DE)

(74) Vertreter: Freischem, Werner, Dipl.-Ing. et al,
Patentanwälte Dipl.-Ing. w. Freischem Dipl.-Ing. I.
Freischem An Gross St. Martin 2
D-5000 Köln 1(DE)

(54) Einstellbarer Fahrzeugsitz.

(57) Bei einem einstellbaren Fahrzeugsitz, der eine neigungsverstellbare Rückenlehne aufweist, und der im rückwärtigen Bereich seines Sitzträgers (1) über je eine seitliche Schwenkstütze (3) am Fahrzeugboden angelenkt ist, ist das am Sitzträger (1) befindliche Schwenkgelenk der Schwenkstütze (3) mittels eines mit der Schwenkstütze (3) verbundenen Rastarmes (9) und einer dem Sitzträger (1) zugeordneten Rasteinrichtung winkel-einstellbar und der am Sitzträger (1) angelenkte Lehnenträger ist mittels einer Arretierungsvorrichtung mit Arretierungsbogen (20) und Arretierungsarm (22) festellbar.

Am Rastarm (9) sind auf einem Kreisbogen um das Schwenkgelenk (8) Rastbuchten (10) angeordnet, die mit mindestens einer Scherbucht (11), die sich in einer mit dem Sitzträger (1) verbundenen Platte (12) befindet zusammenwirken. Ferner ist der Arretierungsbogen (20) als Zahnsegment ausgebildet und wirkt mit einem, mit Zähnen (21) ausgerüsteten, am Sitzträger (1) schwenkbar angeordneten Arretierungsarm (22) zusammen. Außerdem ist ein über einen Handgriff (15) betätigbares Sperrglied (14) vorgesehen, das in Sperrstellung erstens mit mindestens einer Rastnase (13) in die Scherbucht (11) und eine Rastbucht (10) greift und zweitens mit einer Arretierungsnase (16) an einer Arretierungsflanke des Arretierungsarmes (22) anliegt. Das Sperrglied (14) ist wahlweise um die Rastnase (13) und um die Arretierungsnase (16) schwenkbar und ist von einer, zwischen bei den Nasen (13, 16) angreifenden Feder (17) in seiner Sperrstellung gehalten. Schließlich ist am Arretierungsarm (22) eine mit der Arretierungsnase (16) zusammenwirkende Löseflanke vorgesehen.

./...

FIG. 1

-1-

Anmelderin:   C. Rob. Hammerstein GmbH
              5650 Solingen 13

Bezeichnung:  Einstellbarer Fahrzeugsitz

Die Erfindung betrifft einen einstellbaren Fahrzeugsitz, der eine neigungsverstellbare Rückenlehne aufweist und der im rückwärtigen Bereich seines Sitzträgers über je eine seitliche Schwenkstütze am Fahrzeugboden angelenkt ist und dessen am Sitzträger befindliches Schwenkgelenk der Schwenkstütze mittels eines mit der Schwenkstütze verbundenen Rastarmes und einer dem Sitzträger zugeordneten Rasteinrichtung winkeleinstellbar ist und dessen am Sitzträger angelenkte Lehnenträger mittels einer Arretierungsvorrichtung mit Arretierungsbogen und Arretierungsarm feststellbar ist.

Ein derartiger Sitz ist aus der DE-OS 21 08 109 bekannt. Bei diesem Fahrzeugsitz ist am Sitzträger ein mit Rastlöchern versehener Rastenbogen befestigt, beim Verstellen des Sitzträgers fährt dieser Rastenbogen entlang des freien Endes des Rastarms. Über eine Rastnase kann der Winkel zwischen dem Sitzträger und der hinteren Schwenkstütze festgelegt werden. Eine vergleichbare Einstellung dient zur Festlegung der Neigung der Sitzlehne.

Weiterhin ist aus der DE-OS 22 32 117 ein Fahrzeugsitz bekannt, der ebenfalls einen höhen- und neigungsverstellbaren Sitzträger und eine in ihrer Neigung einstellbare Rückenlehne aufweist. Wie bei dem Fahrzeugsitz nach der DE-OS 21 08 109 sind für die einzelnen Einstellfunktionen des Fahrzeugsitzes getrennte Bedienungsteile vorgesehen. Damit müssen für die Einstellung dieser Fahrzeugsitze unterschiedliche Handgriffe bedient werden, um die einzenen Einstellfunktionen zu betätigen.

Beim Sitz nach der DE-OS 22 32 117 sind für die Einstellung des Fahrzeugsitzes insgesamt vier Handgriffe vorgesehen. Dadurch wird die Einstellung des bekannten Fahrzeugsitzes erschwert, die Einstellung erfolgt nicht in sinnfälliger Weise. Da Sitzeinstellungen nur gelegentlich vorgenommen werden, sind dem Benutzer die verschiedenen Funktionen der einzelnen Handgriffe nicht geläufig. Für den durchschnittlichen Benutzer wird dadurch die Bedienung kompliziert.

Aufgabe der Erfindung ist es, die Nachteile der bekannten Fahrzeugsitze zu vermeiden und einen Fahrzeugsitz zu schaffen, der bequem und sinnfällig einstellbar ist, in der Benutzung sicher ist und günstig gefertigt sowie gewartet werden kann.

Diese Aufgabe wird dadurch gelöst, daß am Rastarm auf einem Kreisbogen um das Schwenkgelenk Rastbuchten angeordnet sind, die mit mindestens einer Scherbucht zusammenwirken, die sich in einer mit dem Sitzträger verbundenen Platte befindet, daß der Arretierungsbogen als Zahnsegment ausgebildet ist und mit einem mit Zähnen ausgerüsteten, am Sitzträger schwenkbar angeordneten Arretierungsarm zusammenwirkt, daß ein über einen Handgriff betätigbares Sperrglied vorgesehen ist, das in Sperrstellung erstens mit mindestens einer Rastnase in die Scherbucht und eine Rastbucht greift und zweitens mit einer Arretierungsnase an einer Arretierungsflanke des Arretierungsarmes anliegt, das wahlweise um die Rastnase und um die Arretierungsnase schwenkbar ist und das von einer, zwischen beiden Nasen angreifenden Feder in seiner Sperrstellung gehalten ist und daß am Arretierungsarm eine mit der Arretierungsnase zusammenwirkende Löseflanke vorgesehen ist.

Dieser Fahrzeugsitz ermöglicht eine bequeme Verstellung sowohl des Sitzträgers in Neigung und Höhe, wie auch des Lehnenträgers in dessen Neigung über nur einen Handgriff. Da bei Einstellung des Sitzes häufig nicht nur der Sitzträger verändert, sondern auch die Einstellung der Sitzlehne korrigiert wird, ist die Einstellung eines Fahrzeugsitzes mittels nur eines Bedienungsorgans besonders günstig, bequem und einfach. Die einzelnen Teile für die Einstellfunktionen des Fahrzeugsitzes sind größtenteils flache Stanzteile und somit normal zu fertigen. Der Gesamtaufwand an Bauteilen ist klein, so daß sich Vorteile in der Produktion ergeben, die Einstellvorrichtung leicht aufgebaut werden kann und zudem das Risiko eines Klapperns geringer ist als bei einer größeren Anzahl Bauteile.

Der über den Handgriff betätigbare Sperrhebel für die Einhandbedienung des Sitzes hat selbst keine raumfeste Schwenkachse, er schwenkt vielmehr - je nach Betätigungsrichtung - um eine seiner Nasen. Wird der Handgriff nach oben gezogen, so kommt beispielsweise die Arretierungsvorrichtung für die Sitzlehne außer Eingriff, indem das Sperrglied um seine Rastnase schwenkt und die Arretierungsnase von der Arretierungsflanke freikommt und über die Löseflanke den Zahneingriff der Arretierungseinrichtung aufhebt. Während dieser Vorgänge beim Lösen der Arretierung der Rücklehne wird die Rastnase stärker in die ihr zugeordneten Buchten gedrückt, so daß die Rastung der Höhen- und Neigungseinstellung verstärkt aufrechterhalten wird. Damit wird verhindert, daß beide Einstellfunktionen gleichzeitig gelöst werden können, was für den durchschnittlichen Benutzer eine Erleichterung in der Bedienung bedeutet.

Durch die Feder wird das Sperrglied in seiner Sperrstellung gehalten. Die Betätigung des Sperrgliedes über den Handgriff erfolgt in beiden Richtungen gegen die Wirkung dieser Feder. Eine Bewegung des Sperrgliedes rechtwinklig zur Kraftrichtung der Feder wird durch die Längsführung verhindert. Zweckmäßigerweise ist die Längsführung mit der Scherbucht kombiniert, indem diese in zwei Flanken der Längsführung übergeht, die beide auf je einem Kreisbogen um die Arretierungsnase liegen und entlang derer die Rastnase bzw. die Rastnasen anliegen und geführt werden.

Die Einstellung des Sitzes wird durch Federn vereinfacht, die den Sitz beim Betätigen des Sperrgliedes anheben bzw. den Winkel zwischen dem Lehnenträger und dem Sitzträger zu verkleinern trachten.

Ein Ausführungsbeispiel der Erfindung ist in der Zeichnung dargestellt und wird im folgenden näher beschrieben.

Es zeigen

Fig. 1 eine Seitenansicht auf einen einstellbaren Fahrzeugsitz,

Fig. 2 ein Schnittbild entlang der Schnittlinie II-II in Fig. 1,

Fig. 3 bis 5 einen Ausschnitt aus Fig. 1 zur Erläuterung der beim Einstellen des Sitzes ablaufenden Bewegungen,

Fig. 6 eine perspektivische Darstellung einer Schwenkstütze mit Platte und Traverse.

Fig. 7 bis 10 zeigen Ausschnitte des Fahrzeugsitzes mit unterschiedlichen Ausgleichsfedern.

Ein Sitzträger 1 des Fahrzeugsitzes nach der Zeichnung ist über je zwei seitliche Schwenkstützen 2,2'; 3,3' an zwei Sitzschienen 4,5 von mit dem Fahrzeug verbundenen Gleitschienenpaaren 4,6; 5,7 angelenkt. Dadurch wird an jeder Sitzseite ein Kurbelschwinge-Mechanismus ausgebildet, der beim Verschwenken der Schwenkstütze 2,2', 3,3' einerseits eine Höhenverstellung des Sitzträgers 1 ermöglicht und - aufgrund der unterschiedlichen Längen der hinteren Schwenkstützen 2,3 im Verhältnis zu den beiden vorderen Schwenkstützen 2', 3' - andererseits zugleich eine Neigungsverstellung des Sitzträgers 1 zuläßt.

Die Position des Sitzträgers 1 gegenüber den Sitzschienen 4,5 wird durch Festlegen des Schwenkgelenks 8 zwischen dem Sitzträger 1 und den hinteren Schwenkstützen 2 bzw. 3 festgelegt. Zu diesem Zweck ist zumindest die außenseitig liegende, hintere Schwenkstütze 3 L-förmig ausgebildet, sie geht oberhalb des Schwenkgelenks 8 in einen Rastarm 9 über. Dieser Rastarm 9 hat vier, auf einem Kreisbogen um das Schwenkgelenk 8 nebeneinander angeordnete Rastbuchten 10, die in Richtung zum Schwenkgelenk 8 hin offen sind.

Am Sitzträger 1 und entlang eines Kreisbogens um das Schwenkgelenk 8 mit dem gleichen Radius wie der Kreisbogen für die Rastbuchten 10 sind zwei Scherbuchten 11 vorgesehen. Sie stimmen in ihren Abmessungen mit den Rastbuchten 10 weitgehend überein. Wie aus der Zeichnung ersichtlich, sind diese Scherbuchten 11 als Ausstanzungen in einer Platte 12 ausgeführt, diese ist mit dem Sitzträger 1 fest verbunden.

Die vier Rastbuchten 10 und die beiden Scherbuchten 11 werden über zwei Rastnasen 13 gegeneinander versperrt, die an einem flachen Sperrglied 14 in Form zweier Stifte seitlich vorstehen. Dadurch können drei verschiedene Winkelpositionen am Schwenkgelenk 8, also zwischen der hinteren Schwenkstütze 2 bzw. 3 und dem Sitzträger 1, eingerastet werden.

Das Sperrglied 14 kann über einen nach vorn ragenden Handgriff 15 betätigt werden. Neben den beiden Rastnasen 13 ist im hinteren Bereich des Sperrgliedes 14 eine Arretierungsnase 16 vorgesehen. Zwischen den Nasen 13,16 greift eine als Schenkelfeder ausgebildete Feder 17 an, die das Sperrglied 14 nach schräg vorn oben drückt. Hierzu stützt sich die Feder einerseits auf der Platte 12 ab, andererseits greift sie unter einen, am Sperrglied 14 seitlich vorstehenden Stift 18.

Die Arretierungsnase 16 dient zum Sperren und Lösen der Arretierungseinrichtung für die Einstellung eines Lehnenträgers 19, der im oberen Bereich der Platte 12 schwenkbar angelenkt ist. Unterhalb dieses Gelenks setzt sich der Lehnenträger 19 in einen als Zahnsegment ausgebildeten Arretierungsbogen 20 fort, in diesen greifen die Zähne 21 eines an der Platte 12 schwenkbar angeordneten Arretierungsarmes 22.

Ebenfalls am freien Ende des Arretierungsarmes 22 wie die Zähne 21, jedoch auf der gegenüberliegenden Seite ist am Arretierungsarm 22 eine Sperrflanke 23 ausgebildet, deren Verlauf dergestalt ist, daß ein Kreisbogen um die vordere Rastnase 13 die Arretierungsflanke 23 in einem spitzen Winkel schneidet. Auf demselben Kreisbogen um eine der Rastnasen 13 liegt der Arretierungsflanke 23 eine Löseflanke 24 gegenüber.

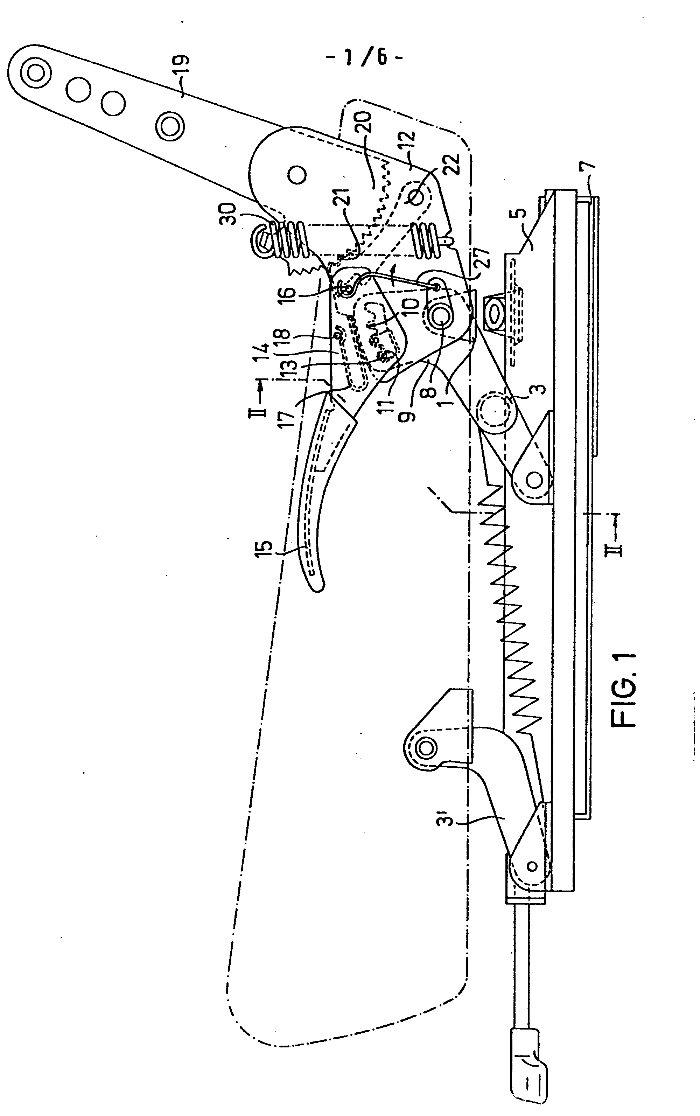

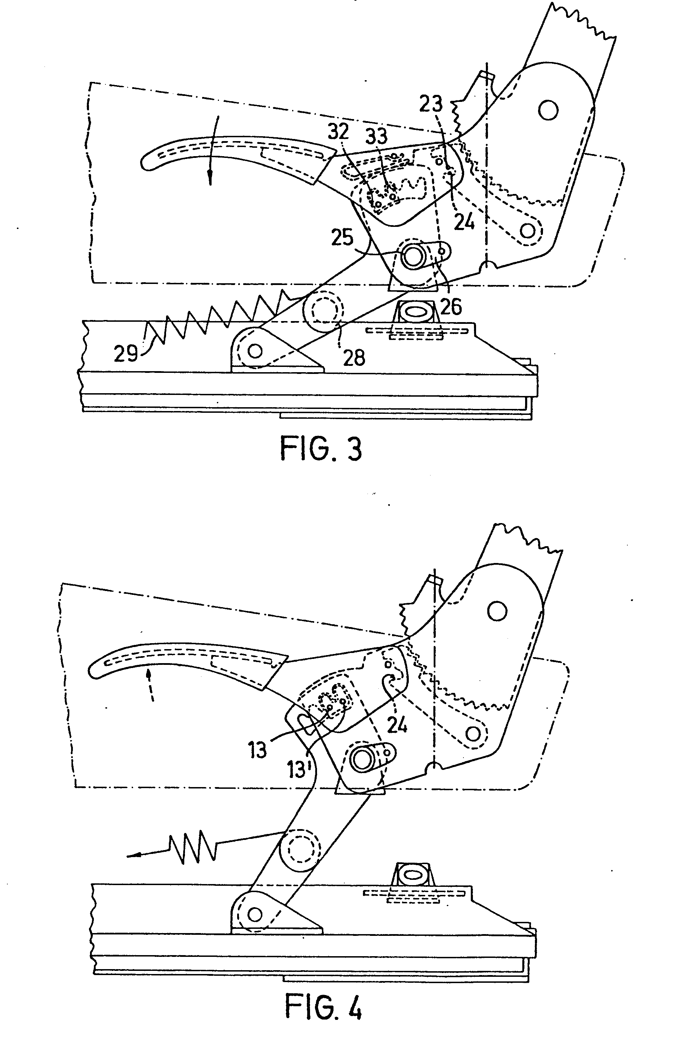

Die Funktion der kombinierten Verstelleinrichtung im hinteren Sitzbereich geht aus den Fig. 1 und 3 bis 5 hervor: In Figur 1 ist die Sperrstellung des Sperrgliedes 14 gezeigt. Die Feder 17 drückt das Sperrglied 14 in eine derartige Position, daß einerseits die beiden Rastnasen 13,13' und andererseits zugleich auch die Arretierungsnase 16 die jeweils zugeordnete Sperreinrichtung blockiert. In dieser Stellung befindet sich der Handgriff 15 in seiner Neutralposition. Wird der Handgriff nun nach unten gedrückt (Fig. 3), so erfolgt diese Bewegung gegen die Wirkung der Feder 17 und um einen Schwerpunkt, der durch die Arretierungsnase 16 bestimmt ist. Beim Herabdrücken des Handgriffs 15 wird aufgrund des Klemmwinkels zwischen der Arretierungsflanke 23 und der Arretierungsnase 16 der Druck der Arretierungsnase 16 gegen die Arretierungsflanke 23 vergrößert. Ungehindert können sich jedoch die beiden Rastnasen 13,13' nach unten bewegen, so daß die Rastbuchten nicht mehr über die Scherbucht mit dem Sitzträger versperrt sind. In dieser Position (Fig. 3) kann die Neigung der Schwenkstützen verändert werden - zum Beispiel in die in Fig. 4 gezeigte Position. Nach Loslassen des Handgriffs 15 wird die Rasteinrichtung wieder festgelegt.

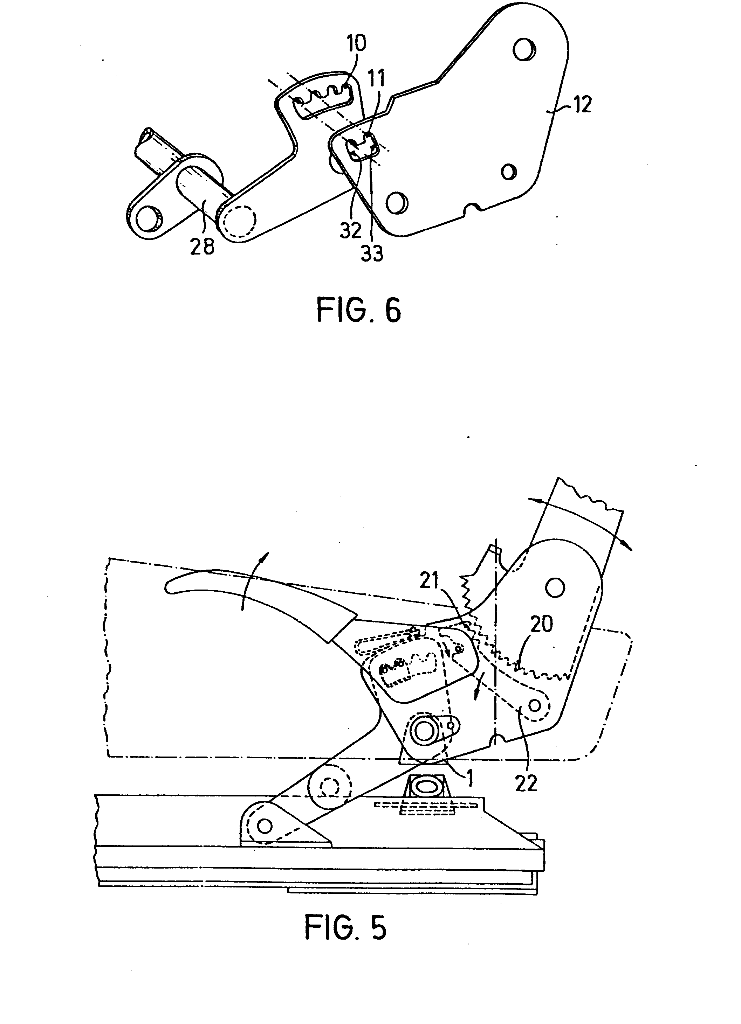

Wird der Handgriff 15 nach oben gezogen, so schwenkt das Sperrglied 14 um die vordere Rastnase 13, die Arretierungsnase 16 wandert von der Arretierungsflanke auf einem Kreisbogen zur Löseflanke und drückt durch Anlage an die Löseflanke die Zähne 21 außer Eingriff mit dem Arretierungsbogen 20. In dieser Position (Fig. 5) kann die Neigung des Lehnenträgers 19 gegenüber dem Sitzträger 1 verändert werden.

Gegen ein Verschieben in Richtung der Verbindungslinie seiner Nasen 13,13' und 16 ist das Sperrglied
14 durch eine Längsführung gesichert. Diese wird
– wie Fig. 3 und 6 zeigt – gebildet durch zwei Flanken 32,33 an der Platte 12. Sie verlängern die äußeren Ränder der Scherbuchten 11 und verlaufen damit
radial auf das Schwenkgelenk 8 zu. An diesen Flanken 32,33 liegen die Außenflächen der Rastnasen 13,
13' an, diese und die Flanken 32,33 bilden damit
die Längsführung.

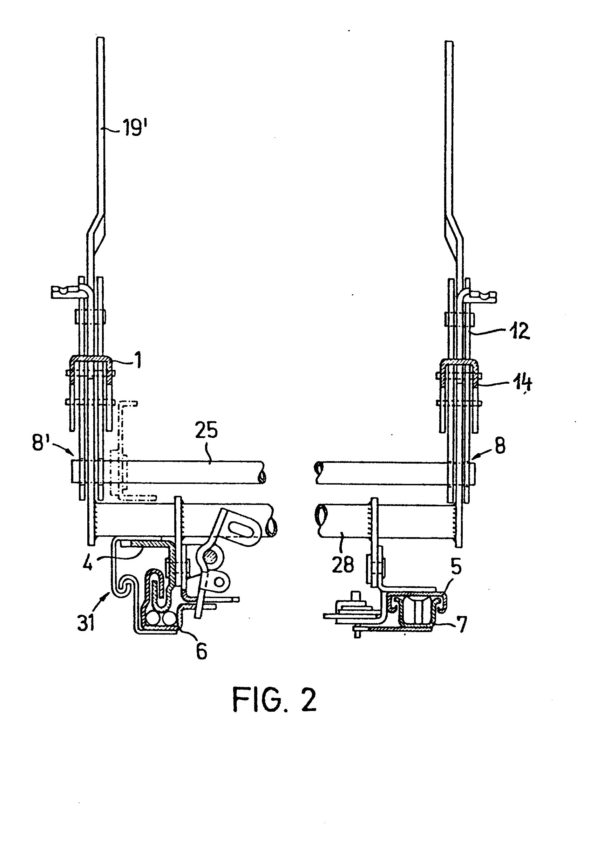

Weitere Einzelheiten des Aufbaus des einstellbaren Fahrzeugsitzes gehen aus Fig. 2 hervor. Danach
erfolgt die Schwenkbewegung der Schwenkgelenke 8,8'
um eine Achse 25, durch sie wird die Einstellung der
Lehnenträger 19,19' beider Sitzseiten miteinander
gekoppelt. Hierzu steht an jedem Ende der Achse 25
ein Stellarm 26 radial weg,am freien Ende des Stellarms ist ein stabartiges Übertragungselement 27 eingehängt, das mit seinem anderen Ende die Arretierungsnase 16 umgreift. Ein Verschwenken der Arretierungsnase 16 mittels des auf der Außenseite des Sitzes
angeordneten Handgriffs 15 führt damit zum Verschwenken der Achse 25 und unter Ablauf der entgegengesetzten Bewegungen zu einer Betätigung des Arretierungsarms der Gegenseite.

Die beiden hinteren Schwenkstützen 2,3 sind
über eine Traverse 28 fest miteinander verbunden,
diese Traverse 28 sichert die Parallelität der
Schwenkbewegungen der hinteren Schwenkstützen 2,3
und damit auch der vorderen Schwenkstützen 2',3'.
In der Mitte der Traverse 28 greift eine Schraubenfeder 29 an, die bei Freigabe der Rasteinrichtung
die Schwenkstützen 2,2'; 3,3' nach oben schwenkt, so
daß der Sitzträger 1 höher kommt. Auf beiden Sitzseiten ist eine Zugfeder 30 angeordnet, die den Win-

-9-

kel zwischen dem Lehnenträger 19,19' und dem Sitzträger 1 zu verkleinern trachten.

Wie aus Fig. 2 weiter hervorgeht, sind die beiden hinteren Schwenkstützen 2,3 zweiteilig ausgebildet, beide Teile sind an der Traverse 28 angeschweißt und in deren Achsrichtung seitlich gegeneinander versetzt. Der untere Teil der beiden hinteren Schwenkstützen 2,3 ist mit der Sitzschiene 4,5 verbunden.

Die beiden Gleitschienenpaare 4,6 und 5,7 sind - wie Fig. 2 zeigt - unterschiedlich ausgebildet. Das tunnelseitige Gleitschienenpaar 4,6 ist hochstegig ausgebildet (siehe DE-GM 77 11 097) und mittels einer Zusatzkralle in seinem hinteren Bereich verstärkt. Demgegenüber ist das fahrzeugaußenseitig liegende Gleitschienenpaar 5,7 einfacher ausgebildet. Diese Konstruktion ist auf einen Sicherheitsgurt abgestimmt, der tunnelseitig am Fahrzeugsitz verankert wird, dessen anderer Befestigungspunkt jedoch an der Karosserie des Fahrzeugs liegt. Bei dieser Ausführung muß lediglich das tunnelinnenseitig gelegene Gleitschienenpaar 4,6 hohe vertikale Kräfte auffangen können, - wie sie zum Beispiel bei einem Unfall auftreten.

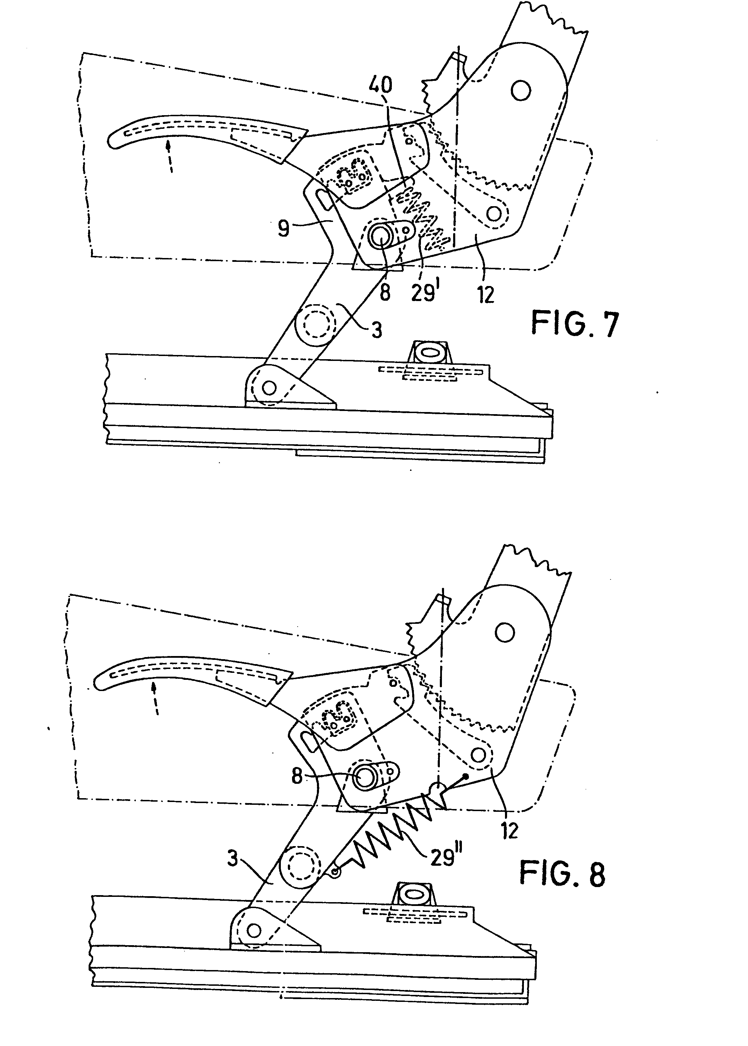

Bei der Ausführungsform nach Fig. 6 wird die das Körper- und Sitzgewicht bei Anheben des Fahrzeugsitzes ausgleichende Feder von einer Druckfeder 29' gebildet, die zwischen einer Nase 40 des Rastarms 9 bzw. der Schwenkstütze 3 und der fest mit dem Sitzträger 1 verbundenen Platte 12 angeordnet ist. Wie Fig. 7 zeigt, kann anstelle der Druckfeder 29' auch eine Zugfeder 29" vorgesehen sein, die zwischen der Schwenkstütze 3 und der Platte 12 angeordnet ist.

Gemäß Fig. 8 kann die Ausgleichsfeder auch von einer oder mehreren Blattfedern 29"' gebildet sein. Bei der Ausführungsform nach Fig. 8 ist die Blattfeder 29'" an der Platte 12 festgelegt und drückt mit ihrem freien unter Spannung stehenden Ende gegen die Schwenkstütze 3 bzw. gegen die die beiden hinteren Schwenkstützen verbindende Rohrtraverse 28.

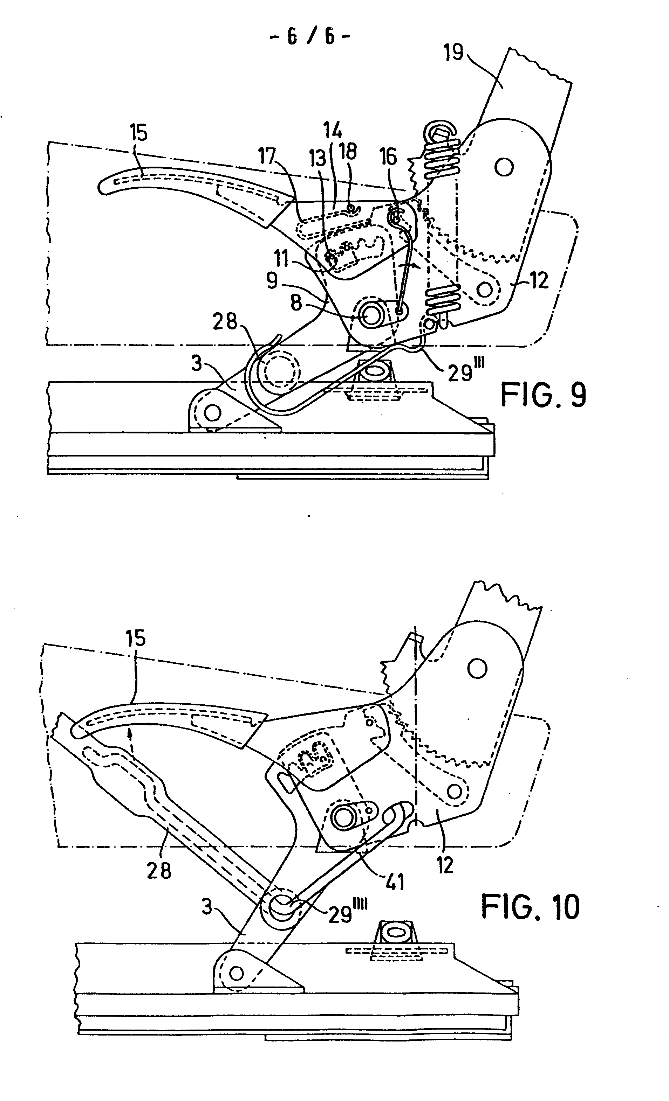

Gemäß Fig. 9 kann die Ausgleichsfeder auch von einer Torsionsfeder 29"" gebildet sein, deren in vertikaler Ebene federnder Arm 41 mit seinem freien Ende an der mit dem Sitzträger verbundenen Platte 12 angreift. Die Torsionsfeder 29"" ist innerhalb der Rohrtraverse 28 angeordnet, welche die beiden hinteren Schwenkstützen 2,3 miteinander starr verbindet. Die Torsionsfeder 29"" kann auch in der Achse des Schwenkgelenkes 8 angeordnet sein.

Die vorgeschlagenen Ausgleichsfedern haben den Vorteil, daß ihr Gewicht relativ klein bleiben kann und in einem Bereich des Fahrzeugsitzes angeordnet werden können, wo sie nicht stören.

Wie die Fig. 2 zeigt, ist das Sperrglied 14 im Querschnitt U-förmig ausgebildet und hat zwei Seitenwände, in denen die als Bolzen ausgebildeten Rastnasen 13,13' beidendig festgelegt sind. Infolge dieser zweischnittigen Anordnung ist die Rastvorrichtung trotz relativ leichter Ausführung hoch belastbar. Es ist aber auch möglich, die erfindungsgemäße Vorrichtung nur einschnittig auszuführen.

0007107

-1-

PATENTANSPRÜCHE

1. Einstellbarer Fahrzeugsitz, der eine neigungsververstellbare Rückenlehne aufweist, und im rückwärtigen Bereich seines Sitzträgers über je eine seitliche Schwenkstütze am Fahrzeugboden angelenkt ist und
dessen am Sitzträger befindliches Schwenkgelenk der
Schwenkstütze mittels eines mit der Schwenkstütze verbundenen Rastarmes und einer dem Sitzträger zugeordneten Rasteinrichtung winkeleinstellbar ist und dessen am Sitzträger angelenkte Lehnenträger mittels
einer Arretierungsvorrichtung mit Arretierungsbogen
und Arretierungsarm feststellbar ist,
dadurch gekennzeichnet,
daß am Rastarm (9) auf einem Kreisbogen um das
Schwenkgelenk (8) Rastbuchten (10) angeordnet sind,
die mit mindestens einer Scherbucht (11) zusammenwirken, die sich in einer mit dem Sitzträger (1) verbundenen Platte (12) befindet, daß der Arretierungsbogen (20) als Zahnsegment ausgebildet ist und mit
einem, mit Zähnen (21) ausgerüsteten, am Sitzträger (1) schwenkbar angeordneten Arretierungsarm (22)
zusammenwirkt, daß ein über einen Handgriff (15) betätigbares Sperrglied (14) vorgesehen ist, das in
Sperrstellung erstens mit mindestens einer Rastnase (13,13') in die Scherbucht (11) und eine Rastbucht (10) greift und zweitens mit einer Arretierungsnase (16) an einer Arretierungsflanke (23) des Arretierungsarmes (22) anliegt, das wahlweise um die Rastnase (13) und um die Arretierungsnase (16) schwenkbar
ist und das von einer, zwischen beiden Nasen (13,16)
angreifenden Feder (17) in seiner Sperrstellung gehalten ist und daß am Arretierungsarm (22) eine mit
der Arretierungsnase (16) zusammenwirkende Löseflanke (24) vorgesehen ist.

2. Fahrzeugsitz nach Anspruch 1, dadurch gekennzeichnet, daß das Sperrglied (14) in einer Längsführung geführt ist, welche durch zwei Flanken (32,33) der Scherbucht (11), die beide auf je einem Kreisbogen um die Arretierungsnase (16) liegen, gebildet ist.

3. Fahrzeugsitz nach Anspruch 1 oder 2, gekennzeichnet durch eine den Lehnenträger (19,19') in Richtung auf den Sitzträger (1) schwenkende Feder (30).

4. Fahrzeugsitz nach einem der Ansprüche 1 bis 3, dadurch gekennzeichnet, daß die beiden hinteren Schwenkstützen (2,3) über eine Traverse (28) starr miteinander verbunden sind, und an ihnen mindestens eine den Fahrzeugsitz anhebende Ausgleichsfeder (29,29', 29", 29"', 29"") angreift.

5. Fahrzeugsitz nach einem der Ansprüche 1 bis 4, dadurch gekennzeichnet, daß die Sperrglieder (14) auf beiden Seiten des Sitzes über eine durch die Schwenkgelenke (8,8') hindurchlaufende Achse (25) mit Stellarmen (26) und über Stäbe (27), welche an den Stellarmen (26) und den Arretierungsnasen (16) angreifen, gekuppelt sind.

6. Fahrzeugsitz nach Anspruch 4 oder 5, dadurch gekennzeichnet, daß die Ausgleichsfeder eine Druckfeder (29') ist, welche zwischen einer Nase (40) des mit der Schwenkstütze (3) starr verbundenen Rastarms (9) und der mit dem Sitzträger (1) fest verbundenen Platte (12) angeordnet ist. (Fig. 7)

7. Fahrzeugsitz nach Anspruch 4 oder 5, dadurch gekennzeichnet, daß die Ausgleichsfeder eine Zugfeder (29") ist, die zwischen der mit dem Sitzträger

0007107

-3-

verbundenen Platte (12) und der Schwenkstütze (3) eingesetzt ist. (Fig. 8)

8. Fahrzeugsitz nach Anspruch 4 oder 5, dadurch gekennzeichnet, daß die Ausgleichsfeder eine Blattfeder (29"') ist, die mit einem Teil, beispielsweise an der Platte (12) festgelegt ist und mit ihrem anderen Teil gegen die Schwenkstütze (3) oder einem damit starr verbundenen Teil (28) drückt. (Fig. 9)

9. Fahrzeugsitz nach Anspruch 4 oder 5, dadurch gekennzeichnet, daß die Ausgleichsfeder eine Torsionsfeder (29"") ist, deren in vertikaler Ebene federnder Arm (41) mit seinem freien Ende an der mit dem Sitzträger verbundenen Platte (12) angreift.(Fig. 10)

10. Fahrzeugsitz nach Anspruch 9, dadurch gekennzeichnet, daß die Torsionsfeder (29"") innerhalb einer die beiden hinteren Schwenkstützen (2,3) verbindenden rohrförmigen Traverse (28) angeordnet ist.

11. Fahrzeugsitz nach einem der Ansprüche 1 bis 5, dadurch gekennzeichnet, daß der Arretierungsarm (22) als einarmiger Hebel ausgebildet ist, der im Bereich seines freien Endes an einer Seite Zähne (21) und auf der, diesen Zähnen (21) gegenüberliegenden Seite die Arretierungsflanke (23) aufweist.

12. Fahrzegusitz nach einem der Ansprüche 1 bis 11, dadurch gekennzeichnet, daß das Sperrglied (14) doppelwandig ist und die bolzenförmigen Rastnasen (13, 13') an beiden Enden in den Wänden des Sperrgliedes (14) festgelegt sind.

13. Fahrzeugsitz nach einem der Ansprüche 1 bis 12, dadurch gekennzeichnet, daß das außenseitig angeordnete Schienenpaar (5,7) für geringere vertikale Zug- und Biegebelastung ausgelegt ist und das andere tunnelseitige Schienenpaar (4,6) zur Aufnahme großer vertikaler Zugkräfte und Biegemomente hochstegig ausgebildet ist, wobei sowohl die Sitzschiene (4) als auch die Basisschiene (6) im wesentlichen ein J-förmiges Profil haben und die freien vertikalen Schenkel von dem U-förmigen Bogen der jeweils anderen Schiene umgriffen werden und daß tunnelseitig die Befestigung für den Sicherheitsgurt unmittelbar oder mittelbar mit der Sitzschiene verbunden ist. (Fig. 2)

FIG. 1

FIG. 2

FIG. 3

FIG. 4

0007107

FIG. 6

FIG. 5

FIG. 7

FIG. 8

FIG. 9

FIG. 10

Europäisches
Patentamt

**EUROPÄISCHER RECHERCHENBERICHT**

Nummer der Anmeldung

EP 79 102 437.5

| | **EINSCHLÄGIGE DOKUMENTE** | | **KLASSIFIKATION DER ANMELDUNG (Int.Cl.3)** |
|---|---|---|---|
| Kategorie | Kennzeichnung des Dokuments mit Angabe, soweit erforderlich, der maßgeblichen Teile | betrifft Anspruch | |
| A | DE - B2 - 2 409 579 (BREMSHEY) <br> * Fig. 1 * <br><br> -- | 1 | B 60 N 1/02 |
| A | DE - A - 2 421 529 (BRITISH LEYLAND) <br> * Fig. 1 * <br><br> -- | 1 | |
| A | DE - A - 2 206 884 (METALLWERK MAX BROSE) <br> * Fig. 1 * <br><br> ---- | 1 | **RECHERCHIERTE SACHGEBIETE (Int. Cl.3)** <br><br> B 60 N 1/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 05-10-1979 | BECKER |

EPA form 1503.1 06.78